# EUROPÄISCHE PATENTSCHRIFT

(11) **EP 0 316 746 B1**
(45) Veröffentlichungstag und Bekanntmachung des Hinweises auf die Patenterteilung: **04.08.1993**
(21) Anmeldenummer: 88118660.5
(22) Anmeldetag: 09.11.1988
(51) Int. Cl.: G01N 21/89

(54) **Optisches Lochsuchgerät**
Optical apparatus for the detection of holes
Appareil de recherche de trous par voie optique

(30) Priorität: 20.11.1987 DE 3739436
(43) Veröffentlichungstag der Anmeldung: 24.05.1989
(73) Patentinhaber: Erwin Sick GmbH Optik-Elektronik, D-79183 Waldkirch (DE)
(72) Erfinder: Eder, Johannes, D-8000 München 70 (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- DE-A- 3 544 871
- US-A- 3 786 265
- US-A- 4 310 250
- PATENT ABSTRACTS OF JAPAN, Band 11, Nr. 49 (P-547)[2496], 14. Februar 1987;& JP-A-61 217 747
- PATENT ABSTRACTS OF JAPAN, Band 10, Nr. 387 (P-530)[2444], 25. Dezember 1986;& JP-A-61 175 552

## Beschreibung

Die Erfindung betrifft ein optisches Lochsuchgerät für in ihrer Längsrichtung vorgeschobene Bahnen mit einem Laserabtastgerät, welches einen Fahrstrahl auf die Oberfläche der Bahn richtet, der die Bahn quer zu Ihrer Längsrichtung entlang einer Abtastlinie abtastet, und mit einer parallel zur Abtastlinie angeordneten, linearen photoelektrischen Lichtempfangsanordnung, die von Löchern in der Bahn beeinflusstes Licht von der Abtastlinie empfängt und an eine Auswerteelektronik ein elektrisches Signal abgibt, welches von der Auswerteelektronik auf eine für Löcher in der Bahn charakteristische Form und Größe ausgewertet wird die photoelektrische Lichtempfangsanordnung auf der gleichen Seite wie das Laserabtastgerät angeordnet ist und von der Abtastlinie reflektiertes Licht empfängt. Ein solches ist schon aus dem Dokument US-A-4 310 250 bekannt.

Mit Laser-Abtastgeräten und linearen Lichtempfangsvorrichtungen arbeitende Oberflächeninspektionsvorrichtungen zur Erkennung dunkler Flecken aller Art und in jeder Größe sind in verschiedenen Ausführungen bekannt (z. B. DE-OS 28 57 076, DE-OS 28 27 705).

Derartige optische Oberflächeninspektionsgeräte gestatten zwar grundsätzlich auch die Locherkennung; es ist jedoch problematisch, bestimmte Arten von Flecken oder sonstigen Oberflächen von Löchern zu unterscheiden.

Aus diesem Grunde wurden bisher zur Lochsuche in erster Linie in Tranmission arbeitende Lochsuchgeräte verwendet (DE-OS 28 08 359, DE-OS 29 34 554); diese Geräte gestatten zwar eine sichere Locherkennung, weil nur bei Löchern das Licht durch die Bahn zur Lichtempfangsanordnung hindurchgeht, doch erfordern diese bekannten Lochsuchgeräte ein Lichtsendegerät auf einer Seite der Bahn und eine Lichtempfangsanordnung auf der entgegengesetzten Seite der Bahn. Dies macht eine Lochinspektion an solchen Stellen der laufenden Bahn unmöglich, die über eine Umlenkwalze geführt sind. Die Lochsuche auf optischen Wege kann also hier nur vor oder hinter der Umlenkwalzen vorgenommen werden, wo die Bahn jedoch insbesondere bei höheren Geschwindigkeiten flattert und somit ein unsicheres Lochmeldesignal zu erwarten ist.

Ein weiteres Problem stellt der relativ unscharfe Lichtfleck dar. Wird ein derartiges Lochsuchgerät zusätzlich zu einem Oberflächeinspektionsgerät installiert, treten bauliche Schwierigkeiten auf.

Das Ziel der vorliegenden Erfindung besteht darin, ein optisches Lochsuchgerät mit sicherer Locherkennung zu schaffen, bei dem auch in Bereichen, wo die vorgeschobene Bahn über nicht lichtdurchlässige Umlenkwalzen geführt wird, eine optische Lochsuche erfolgen kann.

Zur Lösung dieser Aufgabe sieht die Erfindung vor, daß in einem definierten Abstand in Richtung des Vorschubs der Bahn von dem ersten Laserabtastgerät ein zweites Abtastgerät auf der entgegengesetzten Seite der Bahn angeordnet ist, welches in dem definierten Abstand A die andere Seite der Bahn mit einem Fahrstrahl entlang einer zur ersten parallelen zweiten Abtastlinie abtastet, daß sich auf der gleichen Seite der Bahn wie das zweite Laserabtastgerät parallel zur zweiten Abtastlinie eine weitere lineare photoelektrische Lichtempfangsanordnung erstreckt, die von der zweiten Abtastlinie reflektiertes Licht empfängt und ein elektrisches Signal an die Auswerteelektronik abgibt, und daß die von beiden photoelektrischen Lichtempfangsanordnungen an die Auswerteelektronik abgegebene elektrischen Signale durch Zwischenspeicherung der zuerst empfangenen Signale in Korrelation gebracht werden und daß ein Lochsignal abgegeben wird, wenn beide Lichtempfangsanordnungen an der gleichen Stelle der Bahn das gleiche Signal abgeben.

Der Grundgedanke der vorliegenden Erfindung ist also darin zu erblicken, daß die laufende Bahn durch zwei gesonderte Laserabtastgeräte bzw. photoelektrische Lichtempfangsanordnungen von beiden Seiten an in Längsrichtung einen Abstand aufweisenden Stellen abgetastet wird und daß die bei diesen beiden Abtastungen gewonnen Empfangssignale in der Weise miteinander korreliert werden, daß in jedem Augenblick zwei Empfangssignale elektronische verglichen werden, die bei der zu verschiedenen Zeiten erfolgten Abtastung der gleichen Stelle der Bahn gewonnen wurden.

Da Flecken aufgrund der statistischen Verteilung auf beiden Seiten der Bahn im allgemeinen nicht zusammenfallen, werden die von Flecken oder sonstigen Strukturen auf entgegengesetzten Oberflächen der Bahn herrührenden Empfangssignale grundsätzlich verschieden ausfallen. Von Löchern in der Bahn herrührende Signale sind jedoch praktisch gleich, unabhängig davon, von welcher Seite das Loch durch ein Laserabtastgerät und die zugeordnete Lichtempfangsanordnung erfaßt wurde. Werden also durch die elektronische Korrelationsvorrichtung an der gleichen Stelle der Bahn zwei gleiche Fehlersignale erkannt, so ist dies im allgemeinen ein sicheres Anzeichen für das Vorliegen eines Loches.

Erfindungsgemäß sind die beiden Laserabtastgeräte und Lichtempfangsanordnungen exakt gleich ausgebildet und auch im gleichen Abstand und unter gleicher Winkeln zur Oberfläche der Bahn angeordnet.

Besonders vorteilhaft ist es, daß die Bahn am Ort der Laserabtastgerät und der Lichtempfangsanordnungen um drehende Umlenkwalzen in der einen bzw. anderen Richtung herumgeführt sind.

Auf diese Weise kann das von den Oberflächen der Walze reflektierte Licht in besonders vorteilhafter und effektiver Weise für die Auslösung eines Lochsignals herangezogen werden. Die Lochsuche erfolgt in diesem Fall auch an einer Stelle der Bahn, wo diese aufgrund der Führung auf Walzen besonders ruhig und flatterfrei geführt ist.

Weitere vorteilhafte Ausgestaltungen der Erfindung sind durch die Patentansprüche 3 bis 12 gekennzeichnet.

Die Vorteile der Erfindung bestehen darin, daß aufgrund der beiderseitigen Inspektion kein Transmissionsempfänger nachgerüstet werden muß. Es kann direkt auf der Walze inspiziert werden. Einbauprobleme entfallen. Durch den möglichen Verzicht auf einen Transmissionsempfänger ist ein kostengünstiger auch nachträglicher Einbau bei bestehenden Bahnführungsanlagen möglich.

Beim nachträglichen Einbau eines erfindungsgmäßen Lochsuchgeräts in bestehende Anlagen mit vorgeschobenen Bahnen können die beiden Laserabtastgeräte mit zugeordneter Lichtempfangsanordung an beliebigen bereits vorhandenen Umlenkwalzen angeordnet werden, wo gerade ausreichend Platz zur Verfügung steht. Der Abstand der beiden Geräte in Vorschubrichtung der Bahn kann in der Elektronik durch geeignete Korrelation berücksichtigt werden. Er muß lediglich ein einziges Mal nach Installation der Laserabtastgeräte mit den Lichtempfangsvorrichtungen exakt ausgemessen, festgestellt und in die Auswerteelektronik fest eingegeben werden.

Auch Beulen und Eindrücke in der Oberfläche der Bahn stören die Lochsuch- und -messung nicht, da diese Fehler zwar gleichzeitig auf beiden Seiten der Bahn auftreten. Sie liefern jedoch ein von Löchern so abweichendes Fehlerbild, daß eine Unterscheidung in der Elektronik problemlos möglich ist.

Die Erfindung wird im folgenden beispielsweise anhand der Zeichnung beschrieben; in dieser zeigt
- Fig. 1: eine schematische Seitenansicht eines erfindungsgemäßen optischen Lochsuchgerätes in Anordung an einer um mehrere Umlenkwalzen geführten laufenden Bahn,
- Fig. 2: eine Draufsicht auf die Bahn im Bereich einer Abtastlinie 13 bzw. 16 und
- Fig. 3: eine schematische Darstellung der beiden beim erfindungsgemäßen optischen Lochsuchgerät verwendeten Laserabtastgeräte und zugeordneten Lichtempfangsanordnungen mit der angeschlossenen Auswerteelektronik.

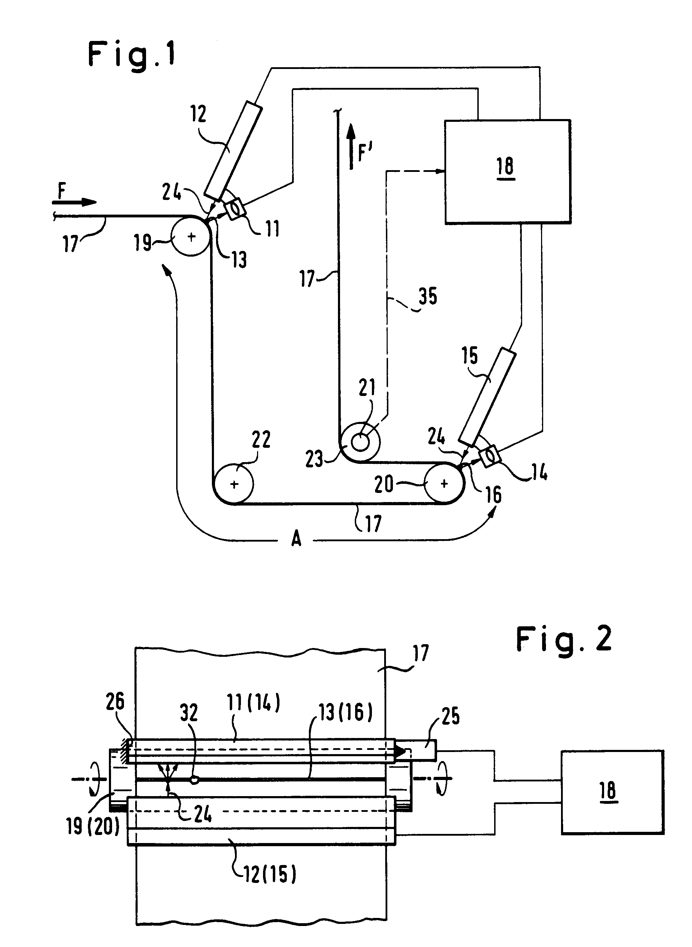

Nach Fig. 1 wird eine möglicherweise an verschiedenen Stellen Löcher aufweisende Materialbahn 17 in Richtung der Pfeile F, F′ kontinuierlich vorgeschoben. Die Bahn 17 wird zunächst um eine Umlenkwalze 19 um etwa 90° herumgeführt, verläuft dann abwärts bis zu einer weiteren Umlenkwalze 22, die die Bahn 17 erneut um 90° in der entgegengesetzten Richtung umlenkt. Die Bahn 17 gelangt schließlich zu einer Umlenkwalze 20, um die die Bahn 17 um 180° herumgeführt ist. Anschließend gelangt die Bahn auf eine weitere Umlenkwalze 23 die die Bahn um 90° in eine vertikale Richtung umlenkt, von wo aus sie nach oben in Richtung des Pfeiles F′ aus der Anordung herausgeführt wird.

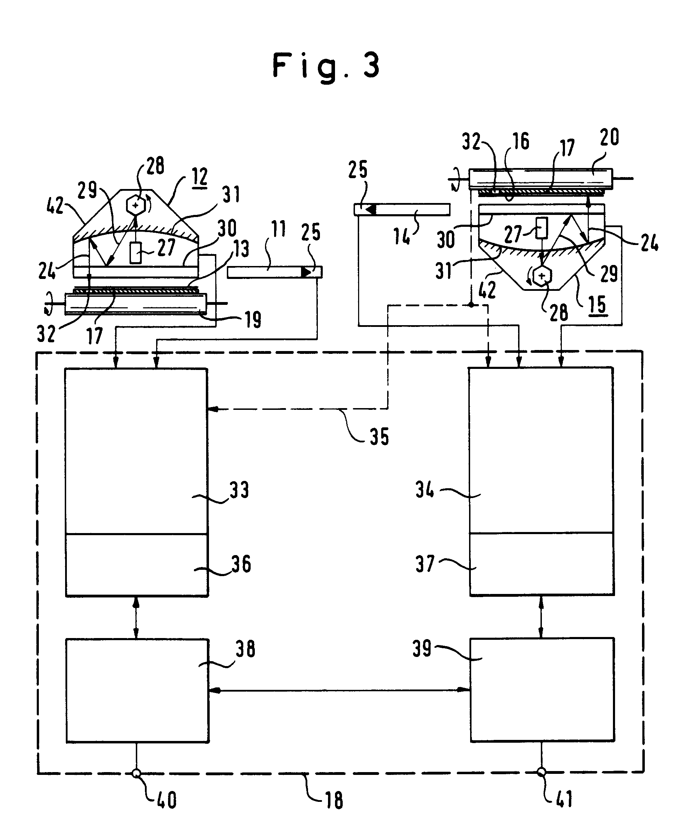

Nach Fig. 1 und 2 ist an der Umlenkwalze 19 ein Laserabtastgerät 12 und eine photoelektrische Lichtempfangsanordung 11 angeordnet. Das Laserabtastgerät 12 erzeugt auf der auf der Umlenkwalze 19 aufliegenden Bahn einen Abtastlichtfleck, der die Bahn entlang einer Abtastlinie 13 periodisch in einer Richtung von Kante zu Kante abtastet, welche parallel zur Achse der Umlenkwalze 19 verläuft. Der aus dem Laserabtastgerät 12 austretende, in einer senkrecht auf der Zeichnungsebene stehenden Ebene parallel zu sich selbst verschobene Fahrstrahl 24 trifft unter einem von der Senkrechten etwas abweichenden Winkel, jedoch relativ steil im Bereich der Abtastlinie 13 auf die Bahn 17 auf, so daß die Lichtempfangsanordnung 11 unter dem Reflexionswinkel zur Oberfläche der Bahn 17 anzuordnen ist, um möglichst viel von dem im Falle des Vorliegens eines Loches 32 (Fig. 2, 3) an der Oberfläche der Walze 19 reflektierten Lichtes zu empfangen.

In entsprechender Weise ist ein gleich ausgebildetes zweites Laserabtastgerät 15 über der Umlenkwalze 20 angeordnet. Unter dem Reflexionswinkel befindet sich dort weiter eine zweite photoelektrische Lichtempfangsanordnung 14, die in entsprechender Weise wie die Lichtempfangsanordnung 11 ausgebildet und angebracht ist.

Die Laserabtastgeräte 12, 15 und die Lichtempfangsanordungen 11, 14 sind an eine Auswerteelektronik 18 angelegt, der auch von einem Vorschubfühler 21 ein Vorschubtaktsignal zugeführt wird, damit die Auswerteelektronik 18 in jedem Augenblick über den Grad des Vorschubs der Bahn 37 informiert ist.

Die Lichtempfangsanordungen sind beim Ausführungsbeispiel nach Fig. 1 und 2 als Lichtleitstäbe 11 bzw. 14 ausgebildet, an deren einer Stirnseite ein Photomultiplier 25 angeordnet ist, während die andere Stirnseite mit einer Verspiegelung 26 versehen ist.

Der Aufbau der Laserabtastgeräte 12, 15 ergibt sich in schematischer Weise aus Fig. 3. Ein Laser 27 beaufschlagt gegebenenfalls über nicht dargestellte optische Mittel ein Spiegelrad 28, welches einen reflektierten Abtastlichtstrahl 29 zu einem Planspiegel 30 in Streifenform umlenkt, von dem das Abtastlichtbündel zu einem streifenförmigen Hohlspiegel 31 zurückreflektiert wird, in dessen Brennpunkt sich die reflektierenden Oberflächen des Spiegelrades 28 befinden. Auf diese Weise wird der parallel zu sich selbst verschobene Fahrstrahl 24 erzeugt, der durch einen Schlitz am unteren Ende des Gehäuses 31 des Laserabtastgerätes 12 bzw. 15 austritt und dort die Oberfläche der Bahn 17 beaufschlagt, so daß dort entlang der Linie 13 die Abtastung mit einem Laserlichtfleck erfolgt. Ein Loch in der Bahn ist beispielsweise bei 32 in Fig. 3 wiedergegeben. Während das Laserabtastgerät 12 die Bahn 17 von oben beaufschlagt, ist das Laserabtastgerät 15 unter der Bahn 17 angeordnet, und zwar im Abstand A (Fig. 1) vom Laserabtastgerät 12.

Die Lichtleitstäbe 11 bzw. 14 sind nur zum Zwecke der besseren Erkennung gegenüber den Laserabtastgeräten 12, 15 in Fig. 3 seitlich gesondert dargestellt. Tatsächlich sind sie wie nach den Fig. 1 und 2 unter dem Reflexionswinkel oberhalb bzw. unterhalb der Bahn 17 angeordnet.

Der Abstand A zwischen den beiden Abtastlinien 13, 16 ist in Fig. 1 durch eine mit Pfeilen am Ende versehene Linien veranschaulicht; er muß nach Installation der Vorrichtung sehr genau ausgemessen und in der Auswerteelektronik 18 gespeichert werden, damit die richtige Korrelation gewährleistet ist.

In Fig. 3 ist die Bahn rechts an dem Laserabtastgerät 15 zu einem späteren Zeitpunkt als am Laserabtastgerät 12 dargestellt. Zwischen den beiden in Fig. 3 dargestellten Positionen hat die Bahn 17 den Abstand A (Fig. 1) von der Abtastlinie 13 zur Abtastlinie 16 durchlaufen.

Aus Fig. 3 ergibt sich auch, daß die Auswerteelektronik 18 im Anschluß an jede Lichtempfangsanordung 11 bzw. 14 eine Signalverarbeitungsstufe 33, 34 aufweist, der außer einem Signal für die momentane Stellung des Spiegelrades 28 und dem Empfangssignal von den Photomultipliern 25 auch gemäß der gestrichelten Linie 35 ein für den Vorschub der Bahn 37 repräsentatives Signal zugeführt ist.

In den Signalverarbeitungsstufen 33 findet eine Schwellenauswertung der empfangenen Signale und eine Fehlerdedektion statt.

Am Ausgang der Signalverarbeitungsstufen 33, 34 sind Schnittstellen 36, 37 zu zwei angeschlossenen Rechnern 38, 39 vorgesehen, zwischen denen sich eine Rechnerschnittstelle, z. B. ein Parallelinterface befindet.

An die Ausgänge 40, 41 der Rechner 38, 39 sind geeignete Ausgabegeräte wie Drucker oder Monitore angeschlossen.

In den Rechnern erfolgt eine Korrelation der durch die einzelnen Abtastungen der beiden Laserabtastgeräte 12, 15 erhaltenen und abgespeicherten Fehlerinformation zu Gesamtfehlern. Die Fehlerinformation wird auf mögliche Löcher untersucht, wobei außerdem Fehlerart und Mindestlochgröße festgestellt werden. Es erfolgt außerdem ein Austausch möglicher Lochfehlerinformationen zwischen den Rechern 38, 39. Die Löcher können mit Längs- und Querkoordinaten ausgegeben werden. Die gefunden Löcher werden über die Ausgänge 40, 41 an geeignete Ausgabegeräte als entsprechende Signale abgegeben.

Die Längenzuordung in der Auswerteelektronik 18 erfolgt dadurch, daß die einzelenen Abtastungen der Laserabtastgeräte 12, 15 hardwaremäßig auf die Bahngeschwindigkeit synchronisiert werden, um eine genaue Längenangabe machen zu können (Vorschubtaktanpassung). Dazu ist ein Vorschubtaktgeber möglich, oder es wird ein für den Vorschub repräsentatives Signal von der Bahn abgeleitet, wie das durch die gestrichelten Linien 35 in den Fig. 1 und 3 angedeutet ist. Wichtig ist, daß die Inspektionssysteme für Oberseite und Unterseite am gleichen Vorschubtaktgeber hängen. Damit ist dynamisch immer der gleiche Takt vorhanden.

Mit der ausgemessenen Längendifferenz und der Tatsache, daß ein Vorschubtaktgeber verwendet wird, kann die Längenzuordnung sehr genau realisiert werden. Für das Verfahren kann ein Fenster als variabler Eingabeparamter definiert werden, um einen Suchbereich festzulegen.

Die Querzuordnung erfolgt in der Weise, daß beide Laserabtastgeräte bei derselben Bahnkante mit der Abtastung beginnen. Hierzu kann sowohl eine mechanische als auch elektronische Synchronisation der beiden Spiegelräder 28 erfolgen. Über eine hardwaremäßige Kantenautomatik beginnt die Zählung der Querkoordinate bei der Bahnkante. Die Querzuordnung kann deshalb direkt ausgeführt werden.

Auch bei der Querkoordinate kann ein Fenster als variabler Eingabeparameter definiert werden, um einen Suchbereich festzulegen.

Um ein gesichertes Erkennen von Löchern noch besser abstimmen zu können, können in der Auswerteelektronik 18 für die Fehlererkennung bei der Abtastung eine Breitenschwelle und eine Amplitudenschwelle festgesetzt werden.

Die Mindestlochgröße ist ein eingebbarer wählbarer Parameter, über den eine bestimmte minimale Lochgröße festgelegt werden kann.

Die vorgenannten vier Kriterien müssen erfüllt werden, damit ein Loch als solches erkannt wird.

Die zu findende minimale Lochgröße hängt von der Größe des vom Fahrstrahl 24 erzeugten Laserlichtflecks auf der Abtastlinie 13 bzw. 16 und von der Bandgeschwindigkeit und der Abtastfrequenz ab. Die minimale Lochgröße, die erkannt werden kann, liegt bei ca. dem 1,5-fachen der Lichtfleckgröße.

## Patentansprüche

1. Optisches Lochsuchgerät für in ihrer Längsrichtung vorgeschobene Bahnen mit einer Laserabtastgerät (12), welches einen Fahrstrahl auf die Oberfläche der Bahn (17) richtet, der die Bahn quer zu ihrer Längsrichtung entlang einer Abtastlinie abtastet, und mit einer parallel zur Abtastlinie angeordneten, linearen photoelektrischen Lichtempfangsanordnung (11), die von Löchern in der Bahn beeinflußtes Licht von der Abtastlinie empfängt und an eine Auswerteelektronik ein elektrisches Signal abgibt, welches von der Auswerteelektronik (18) auf eine für Löcher in der Bahn charakteristische Form und Größe ausgewertet wird, wobei die photoelektrische Lichtempfangsanordnung auf der gleichen Seite wie das Laserabtastgerät angeordnet ist und von der Abtastlinie reflektiertes Licht empfängt,
dadurch **gekennzeichnet,**
daß in einem definierten Abstand (A) in Richtung des Vorschubs der Bahn von dem ersten Laserabtastgerät (12) ein zweites Laserabtastgerät (15) auf der entgegengesetzten Seite der Bahn (17) angeordnet ist, welches in dem definierten Abstand (A) die andere Seite der Bahn (17) mit einem Fahrstrahl entlang einer zur ersten (13) parallelen zweiten Abtastlinie (16) abtastet, daß sich auf der gleichen Seite der Bahn (17) wie das zweite Laserabtastgerät (15) parallel zur zweiten Abtastlinie (16) eine weitere lineare photoelektrische Lichtempfangsanordnung (14) erstreckt, die von der zweiten Abtastlinie (16) reflektiertes Licht empfängt und ein elektrisches Signal an die Auswerteelektronik (18) abgibt, und daß die von beiden photoelektrischen Lichtempfangsanordnungen (11, 14) an die Auswerteelektronik (18) abgegebenen elektrischen Signale in Korrelation gebracht werden und daS ein Lochsignal abgegeben wird, wenn beide Lichtempfangsanordnungen (11, 14) an der gleichen Stelle der Bahn (17) im wesentlichen das gleiche Signal abgeben.

2. Lochsuchgerät nach Anspruch 1,
dadurch **gekennzeichnet,** daß die Bahn (17) am Ort der Laserabtastgeräte (12, 15) und der Lichtempfangsanordnungen (11, 14) um drehende Umlenkwalzen (19, 20) in der einen bzw. anderen Richtung herumgeführt sind, wobei insbesondere die Oberflächen der Umlenkwalzen (19, 20) einen guten Kontrast zur Bahn (17) haben und zweckmäßig bei glänzender Bahn (17) dunkel bzw. matt und bei nichtglänzender Bahn (17) hell bzw. glänzend sind.

3. Lochsuchgerät nach einem der vorhergehenden Ansprüche,
dadurch **gekennzeichnet,** daß der Auswerteelektronik (18) ein Vorschubtaktsignal von einem Vorschubfühler (23) zugeführt ist.

4. Lochsuchgerät nach einem der vorhergehenden Ansprüche,
dadurch **gekennzeichnet,** daß die photoelektrischen Lichtempfangsanordnungen Lichtleitstäbe (11, 14) mit an einer Stirnseite angeordneten Photomultipliern (25) sind.

5. Lochsuchgerät nach einem der vorhergehenden Ansprüche,
dadurch **gekennzeichnet,** daß die Fahrstrahlebene der Laserabtastgeräte (12, 15) schräg auf der Tangetialebene an die Bahn (17) im Bereich der Abtastlinien (13, 16) steht und die Lichtempfangsanordnungen (11, 14) unter dem Reflexionswinkel zu den Laserabtastgeräten (12, 15) angeordnet sind.

6. Lochsuchgerät nach einem der vorhergehenden Ansprüche,
dadurch **gekennzeichnet,** daß bei matter bzw. dunkler Bahn (17) und gut reflektierenden Umlenkwalzen (19, 20) die Fahrstrahlebenen der Laserabtastgeräte (12, 15) so steil auf der Tangentialebene an die Bahn (17) im Bereich der Abtastlinien (13, 16) stehen, daß durch Löcher in der Bahn (17) zur Oberfläche der Walzen (19, 20) gegangenes Licht durch Reflexion zu den Lichtempfangsanordnungen (11, 14) gelangen kann.

7. Lochsuchgerät nach einem der vorhergehenden Ansprüche,
dadurch **gekennzeichnet,** daß beide Laserabtastgeräte (12, 15) jeden Abtastzyklus an der gleichen Kante der Bahn beginnen und über eine hardwaremäßige Kantenautomatik die Zählung der Querkoordinate bei der betreffenden Bahnkante beginnt.

8. Lochsuchgerät nach einem der vorhergehenden Ansprüche,
dadurch **gekennzeichnet,** daß bei der Querkoordinate ein Fenster als variabler Eingabeparameter definiert ist, um einen Suchbereich festzulegen.

9. Lochsuchgerät nach einem der vorhergehenden Ansprüche,
dadurch **gekennzeichnet,** daß in der Auswerteelektronik (18) eine Schwellenschaltung für jedes Fehlersignal vorgesehen ist, wobei für die Fehlererkennung bei der Abtastung sowohl eine Breitenschwelle als auch eine Amplitudenschwelle festgesetzt werden kann.

10. Lochsuchgerät nach einem der vorhergehenden Ansprüche,
dadurch **gekennzeichnet,** daß in die Auswerteelektronik (18) ein wählbarer Parameter für die Mindestlochgröße eingebbar ist, über den eine bestimmte minimale Lochgröße festgelegt werden kann und/oder daß ein Vorschubtaktgeber verwendet wird,
um die Längenzuordnung der beiden Laserabtastgeräte (11, 15) sehr genau realisieren zu können, wobei ein Fenster als variabler Eingabeparameter in der Auswerteelektronik definiert ist, um einen Suchbereich festzulegen.

## Claims

1. Optical hole seeking apparatus for webs which are advanced in their longitudinal direction, the apparatus comprising a laser scanning device (12) which directs a scanning beam onto the surface of the web (17), with the scanning beam scanning the web transverse to its longitudinal direction along a scanning line; and a linear photoelectric light receiving arrangement (11) disposed parallel to the scanning line which receives light from the scanning line influenced by holes in the web and transmits an electrical signal to an electronic evaluation circuit, with the electrical signal being evaluated by the electronic evaluation circuit (18) to see whether a shape and size is present which is characteristic for holes in the web, and the photoelectric light receiving arrangement (11) being disposed on the same side as the laser scanning apparatus (12) and receiving light reflected from the scanning line (13); characterized in that a second laser scanning device (15) is disposed at a defined distance (A) in the direction of advance of the web from the first laser scanning device (12) on the opposite side of the web (17) and scans the other side of the web (17) at the defined distance (A) with a scanning line (16) parallel to the first (13); in that a further linear photoelectric light receiving arrangement (14) disposed on the same side of the web (17) as the second laser scanning device (12) extends parallel to the second scanning line (16) and receives light reflected from this second scanning line (16) and transmits an electrical signal to the electronic processing circuit (18); in that the electrical signals transmitted from the two photoelectric light receiving arrangements (11, 14) to the electronic processing circuit (18) are brought into correlation; and in that a hole signal is transmitted when both light receiving arrangements (11, 14) give substantially the same signal at the same position of the web (17).

2. Hole seeking apparatus in accordance with claim 1, characterised in that the web (17) is guided at the location of the laser scanning devices (12, 15) and of the light receiving arrangements (11, 14) around rotating deflection rollers (19, 20) in the one and the other direction respectively, and wherein in particular the surfaces of the deflection rollers (19, 20) have a good contrast to the web (17), or are expediently dark or mat with a shiny web (17) and are bright or shiny with a non-shiny web (17).

3. Hole seeking apparatus in accordance with any one of the preceding claims, characterised in that an advance timing signal is supplied to the electronic evaluation circuit (18) from an advance sensor (23).

4. Hole seeking apparatus in accordance with any one of the preceding claims, characterised in that the photoelectric light receiving arrangements are light conducting rods (11, 14) with photomultipliers (25) arranged at an end face thereof.

5. Hole seeking apparatus in accordance with any one of the preceding claims, characterised in that the scanning beam plane of the laser scanning devices (12, 15) is disposed obliquely to the tangential plane to the web (17) in the region of the scanning lines (13, 16); and in that the light receiving arrangements (11, 14) are arranged at the angle of reflection to the laser scanning devices (12, 15).

6. Hole seeking apparatus in accordance with any one of the preceding claims, characterised in that with a mat or dark web (17) and well reflecting deflection rollers (19, 20) the scanning beam planes of the laser scanning devices (12, 15) are disposed so steeply relative to the tangential plane to the web (17) in the region of the scanning lines (13, 16) that light passing through the holes in the web (17) to the surface of the rollers (19, 20) can pass by reflection to the light receiving arrangements (11, 14).

7. Hole seeking apparatus in accordance with any one of the preceding claims, characterised in that both laser scanning devices (12, 15) start each scanning cycle at the same edge of the web and in that the counting of the transverse coordinate starts at the relevant edge of the web by means of an automatic edge recognition device effected in hardware.

8. Hole seeking apparatus in accordance with any one of the preceding claims, characterised in that for the transverse coordinates a window is defined as a variable input parameter in order to specify the search region.

9. Hole seeking apparatus in accordance with any one of the preceding claims, characterised in that a threshold circuit is provided in the electronic evaluation circuit (18) for each fault signal, with both a width threshold and also an amplitude threshold being capable of being specified for the fault recognition process.

10. Hole seeking apparatus in accordance with any one of the preceding claims, characterised in that a selectable parameter for the minimum hole size can be fed into the electronic processing circuit (18) by which a specific minimum hole size can be specified, and/or in that an advance timing generator is used in order to realise the length association of the two laser scanning devices (11, 15) very accurately, with a window being defined as a variable input parameter in the electronic evaluation circuit in order to specify a search region.

## Revendications

1. Appareil de recherche de trous par voie optique pour une bande en déplacement dans sa direction longitudinale, comprenant un appareil de balayage à laser (12) qui dirige un faisceau sur la surface de la bande (17), ce faisceau balayant la bande le long d'une ligne de balayage transversalement à sa direction longitudinale, et comprenant un agencement photoélectrique linéaire de réception de lumière (11) disposé parallèlement à la ligne de balayage, qui reçoit la lumière provenant de la ligne de balayage et influencée par les trous dans la bande, et qui envoie un signal électrique à une unité électronique d'évaluation, ledit signal étant évalué par l'unité électronique d'évaluation (18) vis-à-vis d'une forme et d'une taille caractéristique pour les trous dans la bande, l'agencement photoélectrique de réception de lumière étant disposé du même côté que l'appareil de balayage à laser et recevant de la lumière réfléchie depuis la ligne de balayage, caractérisé en ce qu'un second appareil de balayage à laser (15) est disposé du côté opposé de la bande (17) et à une distance définie (A) dans la direction d'avance de la bande par rapport au premier appareil de balayage à laser (12), ce second appareil de balayage balayant l'autre côté de la bande (17) à la distance définie (A) au moyen d'un faisceau le long d'une seconde ligne de balayage (16) parallèle à la première (13); en ce qu'un second agencement photoélectrique linéaire de réception de lumière (14) s'étend parallèlement à la seconde ligne de balayage (16) et du même côté de la bande (17) que le second appareil de balayage à laser (15), ce second agencement de réception de lumière recevant la lumière réfléchie depuis la seconde ligne de balayage (16) et délivrant un signal électrique vers l'unité électronique d'évaluation (18), en ce que les signaux électriques délivrés à l'unité électronique d'évaluation (18) par les deux agencements photoélectriques de réception de lumière (11, 14) sont amenés en corrélation et en ce qu'un signal de trou est délivré lorsque les deux agencements de réception de lumière (11, 14) délivrent sensiblement le même signal au même emplacement de la bande (17).

2. Appareil de recherche de trous selon la revendication 1, caractérisé en ce que, à l'emplacement des appareils de balayage à laser (12, 15) et des agencements de réception de lumière (11, 14), la bande (17) est entraînée dans une direction ou dans l'autre autour de cylindres de renvoi en rotation (19, 20), les surfaces des cylindres de renvoi (19, 20) présentant en particulier un bon contraste vis-à-vis de la bande (17) et étant de préférence sombres ou mates lorsque la bande est brillante, et étant claires ou brillantes lorsque la bande (17) est non-brillante.

3. Appareil de recherche de trous selon l'une quelconque des revendications précédentes, caractérisé en ce que l'unité électronique d'évaluation (18) est alimentée avec un signal d'avance provenant d'un détecteur d'avance (23).

4. Appareil de recherche de trous selon l'une quelconque des revendications précédentes, caractérisé en ce que les agencements photoélectriques de réception de lumière sont des tiges optiques (11, 14) dotées de photomultiplicateurs (25) agencés à une extrémité.

5. Appareil de recherche de trous selon l'une quelconque des revendications précédentes, caractérisé en ce que le plan du faisceau de l'appareil de balayage à laser (12, 15) tombe en oblique sur le plan tangent à la bande (17) dans la région des lignes de balayage (13, 16), et en ce que les agencements de réception de lumière (11, 14) sont disposés sous l'angle de réflexion par rapport aux appareils de balayage à laser (12, 15).

6. Appareil de recherche de trous selon l'une quelconque des revendications précédentes, caractérisé en ce que lorsque la bande (17) est mate ou sombre et que les cylindres de renvoi (19, 20) ont de bonnes propriétés réfléchissantes, les plans des faisceaux des appareils de balayage à laser (12, 15) tombent de manière si abrupte sur le plan tangent à la bande (17) dans la région des lignes de balayage (13, 16) que la lumière qui traversant les trous de la bande (17) arrive sur la surface des cylindres (19, 20) peut parvenir par réflexion aux agencements de réception de lumière (11, 14).

7. Appareil de recherche de trous selon l'une quelconque des revendications précédentes, caractérisé en ce que les deux appareils de balayage par laser (12, 15) démarrent à chaque cycle de balayage par le même bord de la bande, et en ce que le comptage des coordonnées transversales commence par le bord considéré de la bande, au moyen d'un dispositif mécanique de suivi automatique du bord.

8. Appareil de recherche de trous selon l'une quelconque des revendications précédentes, caractérisé en ce que, pour les coordonnées transversales, une fenêtre est définie en tant que paramètre d'entrée variable, afin de fixer une zone de recherche.

9. Appareil de recherche de trous selon l'une quelconque des revendications précédentes, caractérisé en ce qu'il est prévu dans l'unité électronique d'évaluation (18) un circuit de seuil pour chaque signal de défaut et pour la reconnaissance des défauts lors du balayage, on peut fixer à la fois un seuil en largeur et un seuil en amplitude.

10. Appareil de recherche de trous selon l'une quelconque des revendications précédentes, caractérisé en ce que l'on peut introduire dans l'unité électronique d'évaluation (18) un paramètre au choix pour la taille minimale des trous, paramètre au moyen duquel on peut fixer une taille minimale déterminée pour les trous et/ou en ce que l'on utilise un détecteur d'avance afin de pouvoir réaliser de manière très exacte la mise en correspondance longitudinale des deux appareils de balayage à laser (11, 15), une fenêtre étant définie en tant que paramètre d'entrée variable dans l'unité électronique d'évaluation afin de définir une zone de recherche.
